# DEMANDE DE BREVET EUROPEEN

(11) **EP 4 717 679 A1**
(43) Date de publication de la demande: **01.04.2026**
(21) Numéro de dépôt: 25203216.4
(22) Date de dépôt: 18.09.2025
(51) Int. Cl.: C03B 9/16, C03B 9/193, C03B 9/36

(54) **DISPOSITIF DE RÉGLAGE D'UN SUPPORT FOND ÉBAUCHEUR SUR UN DISPOSITIF ÉBAUCHEUR D'UNE SECTION DE MACHINE DE FORMAGE D' ARTICLES CREUX EN VERRE**

(30) Priorité: 20.09.2024 FR 2410049
(71) Demandeur: Technical Machine Equipment Engineering T.M.E. Engineering, 62510 Arques (FR)
(72) Inventeur: Malvezin, Raphaël, 62500 Saint-Omer (FR); Portier, Christophe, 62510 Arques (FR); Havez, Benoît, 62136 Lestrem (FR)
(74) Mandataire: RVDB

(57) **Abrégé**

La présente invention concerne un dispositif de réglage (40) de la contrainte d'un support fond ébaucheur (32), comprenant un mécanisme à came muni d'une came sur laquelle le support fond ébaucheur (32) est apte à prendre appui lors de son montage et un mécanisme d'actionnement configuré pour déplacer la came selon au moins deux positions, le mécanisme à came étant configuré pour placer selon deux hauteurs le support fond ébaucheur (32) prenant appui sur ladite came, en fonction de la position de ladite came. L'invention concerne aussi un support intermédiaire (35) muni d'un tel dispositif de réglage (40)

## Description

### Domaine technique

La présente invention concerne le domaine de la fabrication d'articles creux en verre, tels que des bouteilles ou des flacons, et porte plus précisément sur le réglage des supports fonds ébaucheurs, également appelés des supports têtes de compression, présents sur les dispositifs ébaucheurs des sections d'une machine de formage d'articles creux en verre, dite machine IS. La présente invention vise à faciliter le remplacement et le réglage des supports fonds ébaucheurs sur les sections de la machine IS, en optimisant la précision, la répétabilité et le temps de réglage et en réduisant les risques de dégradation de ces supports fonds ébaucheurs. Pour certaines conceptions de machines IS, la présente invention permettra également le réglage des supports têtes de soufflage présents sur les dispositifs finisseurs des sections d'une machine IS, en optimisant la précision, la répétabilité et le temps de réglage et en réduisant les risques de dégradation de ces supports têtes de soufflage.

### Etat de la technique

Une machine de formage d'articles creux en verre, dite machine IS, est composée de plusieurs sections, généralement comprises entre six et douze. Des paraisons (ou gouttes de verre) sont acheminées jusqu'aux sections de la machine IS notamment par l'intermédiaire de couloirs. Chaque section comprend un dispositif ébaucheur et un dispositif finisseur. Le dispositif ébaucheur permet la formation d'une ou plusieurs ébauches d'articles creux en verre qui seront transférées vers le dispositif finisseur pour former définitivement un ou plusieurs articles creux en verre. Le dispositif ébaucheur comprend deux parties formant un ou plusieurs moules ébaucheurs, un mécanisme d'actionnement permettant de fermer les deux parties pour constituer la ou les ébauches d'article et de les ouvrir pour libérer la ou les ébauches d'article. De même, le dispositif finisseur comprend deux parties formant un ou plusieurs moules finisseurs, un mécanisme d'actionnement permettant de fermer les deux parties pour constituer le ou les articles finis et de les ouvrir pour libérer la ou les articles finis. Le nombre de moules ébaucheurs sur le dispositif ébaucheur et le nombre de moules finisseurs sur le dispositif finisseur sont identiques et peuvent atteindre quatre pour certaines fabrications, en particulier des petits articles creux en verre. Le transfert d'une ébauche d'article du dispositif ébaucheur vers dispositif finisseur est réalisé par un bras de transfert articulé qui saisit la ou les ébauches d'article une fois les deux parties du dispositif ébaucheur ouvertes et la ou les déplace entre les parties du dispositif finisseur ouvertes, avant de refermer lesdites parties pour la finition du ou des articles creux en verre.

Le dispositif ébaucheur sur une section comprend un support fond ébaucheur, également appelé un support tête de compression, qui permet de souffler sous une pression élevée la ou les paraisons introduites dans la ou les moules ébaucheurs du dispositif ébaucheur en position fermée afin de former la ou les ébauches d'article creux en verre. Selon une réalisation, chaque support fond ébaucheur est monté en glissière verticalement sur un support intermédiaire et fixé audit support intermédiaire au moyen d'un premier système de bridage. Le support intermédiaire est lui-même monté en glissière verticalement sur une colonne et fixé à ladite colonne au moyen d'un second système de bridage. La colonne s'étend verticalement selon son axe longitudinal et est mobile en translation et en rotation selon cet axe longitudinal pour pouvoir dégager le support fond ébaucheur du ou des moules ébaucheurs et, inversement, le repositionner sur le ou lesdits moules ébaucheurs afin de réaliser la compression.

Il est important que les supports fonds ébaucheurs soient correctement en appui contre le ou les moules ébaucheurs durant la compression, afin d'éviter une fuite d'air pouvant engendrer un défaut de formation des ébauches d'articles. A ce titre, il est nécessaire de compenser les dilatations sur les supports fonds ébaucheurs dues aux températures sur le ou les moules ébaucheurs et, pour ce faire, les supports fonds ébaucheurs sont positionnés et bridés en appui sur le ou les moules ébaucheurs. Le réglage de la hauteur d'un support fond ébaucheur s'effectue à froid, lors de son montage sur le support intermédiaire lui-même monté sur la colonne, deux méthodes de réglage de la hauteur étant aujourd'hui employées.

Selon une première méthode, un opérateur monte et bride le support fond ébaucheur sur le support intermédiaire, puis il positionne le support fond ébaucheur sur le ou les moules ébaucheurs et procède ensuite au bridage du support intermédiaire sur la colonne. Puis, l'opérateur débride le support fond ébaucheur du support intermédiaire et exerce un effort à la main ou au marteau sur le support fond ébaucheur avant de le rebrider sur le support intermédiaire. Cette première méthode est empirique et donc peu répétable. En outre, lorsqu'il est fait usage d'un marteau, le support fond ébaucheur peut être endommagé, voire cassé. Selon une seconde méthode, un opérateur monte le support fond ébaucheur sur le support intermédiaire en le réhaussant au moyen d'un cale et le bride avec le support intermédiaire, puis il positionne le support fond ébaucheur sur le ou les moules ébaucheurs et procède ensuite au bridage du support intermédiaire sur la colonne. Puis, l'opérateur débride le support fond ébaucheur du support intermédiaire et retire la cale, ce qui compresse le support fond ébaucheur sous l'effet de sa masse, avant de rebrider ledit support fond ébaucheur sur le support. Un inconvénient de cette seconde méthode est que la cale est régulièrement perdue par l'opérateur.

Selon une autre réalisation, le support fond ébaucheur est monté en glissière verticalement directement sur la colonne et fixé à ladite colonne au moyen d'un système de bridage. L'opérateur monte alors le support fond ébaucheur sur la colonne puis il positionne le support fond ébaucheur sur le ou les moules ébaucheurs et exerce un effort à la main ou au marteau sur le support fond ébaucheur avant de le brider sur la colonne. Comme pour la première méthode précitée, celle-ci est empirique et par conséquent peu répétable. En outre, lorsqu'il est fait usage d'un marteau, le support fond ébaucheur peut être endommagé, voire cassé.

Sur certaines machines IS, il est prévu que les têtes de soufflage présentes sur les dispositifs finisseurs des sections, continuent à souffler les bouteilles durant l'ouverture du ou des moules finisseurs présents sur les dispositifs finisseurs de ces sections, avant l'évacuation des bouteilles finies, afin de refroidir le plus longtemps possible ces bouteilles et de réduire ainsi au maximum les risques de défauts de fabrication. Cela peut engendrer un risque de frottement et de dégradation de la tête de soufflage durant l'ouverture des deux parties du dispositif finisseur formant le ou les moules finisseurs.

Il est connu le brevet US4695307 qui porte sur mécanisme moteur destiné à être utilisé dans une machine de fabrication d'objets en verre du type à sections individuelles, pour déplacer un fond ébaucheur, une tête de soufflage ou un entonnoir entre une position active, située sur un moule de la machine, et une position effacée, le mécanisme comprenant des moyens de réglage de la hauteur configurés pour déplacer ledit mécanisme en hauteur afin de régler la hauteur de la position active.

### Résumé de l'invention

La présente invention a pour objectif de pallier les inconvénients précités. A ce titre, l'invention concerne un dispositif de réglage de la hauteur d'un support fond ébaucheur sur un dispositif ébaucheur d'une section de machine IS ou, alternativement, d'un support tête de soufflage sur un dispositif finisseur d'une section de machine IS. Le dispositif de réglage de la hauteur comprend un mécanisme à came muni d'une came sur laquelle le support fond ébaucheur, respectivement le support tête de soufflage, est apte à prendre directement ou indirectement appui lors de son montage. Le dispositif de réglage de la hauteur comprend un mécanisme d'actionnement configuré pour déplacer la came selon au moins deux positions, le mécanisme à came étant configuré pour placer selon au moins deux hauteurs le support fond ébaucheur, respectivement le support tête de soufflage, prenant directement ou indirectement appui sur ladite came, en fonction de la position de ladite came.

On entend par « directement » le fait que le support fond ébaucheur vient en appui direct sur la came, le dispositif de réglage pouvant être monté sur une colonne du dispositif ébaucheur ou sur un support intermédiaire qui reçoit le support fond ébaucheur et qui est monté sur ladite colonne. On entend par « indirectement » le fait que soit le support fond ébaucheur vient en appui sur la came par l'intermédiaire d'une cale présente sur le mécanisme à came, le dispositif de réglage pouvant être monté sur une colonne du dispositif ébaucheur ou sur un support intermédiaire qui reçoit le support fond ébaucheur et qui est monté sur la colonne, soit le support fond ébaucheur est fixé à un support intermédiaire qui vient en appui direct sur la came ou en appui sur la came par l'intermédiaire d'une cale présente sur le mécanisme à came, le dispositif de réglage étant monté sur la colonne du dispositif ébaucheur. Cela s'applique mutatis mutandis pour le support tête de soufflage monté sur une colonne d'un dispositif finisseur.

Ainsi, selon l'invention, le dispositif de réglage permet de régler facilement la hauteur du support fond ébaucheur sur un dispositif ébaucheur, en actionnant une came dans une première position selon laquelle le mécanisme à came permet de placer le support fond ébaucheur en position rehaussée selon laquelle ledit support fond ébaucheur est simplement posé sur l'au moins un moule ébaucheur, puis en actionnant la came dans une seconde position selon laquelle le mécanisme à came permet de placer le support fond ébaucheur en position abaissée selon laquelle ledit support fond ébaucheur est mis en contrainte lors de son positionnement sur l'au moins un moule ébaucheur. Le support fond ébaucheur est finalement bridé sur la colonne du dispositif ébaucheur pour être utilisé dans cette position garantissant sa mise en contrainte sur l'au moins un moule ébaucheur.

De manière comparable, le dispositif de réglage permet de régler facilement la hauteur du support tête de soufflage sur un dispositif finisseur, en actionnant une came dans une première position selon laquelle le mécanisme à came permet de placer le support tête de soufflage en position abaissée selon laquelle ledit support fond ébaucheur est simplement posé sur l'au moins un moule finisseur, puis en actionnant la came dans une seconde position selon laquelle le mécanisme à came permet de placer le support tête de soufflage en position rehaussée selon laquelle l'appui dudit support tête de soufflage est soulagé lors de son positionnement sur l'au moins un moule finisseur. Le support tête de soufflage est finalement bridé sur la colonne du dispositif finisseur pour être utilisé dans cette position garantissant un soulagement de l'appuie sur l'au moins un moule finisseur.

Selon une réalisation du dispositif de réglage objet de l'invention, la came est configurée pour disposer d'au moins deux points d'appui sur lesquels le support fond ébaucheur, respectivement le support tête de soufflage, est apte à prendre directement ou indirectement appui. En outre, le mécanisme d'actionnement est configuré pour changer le point d'appui de la came auquel correspond une hauteur de positionnement du support fond ébaucheur, respectivement du support tête de soufflage, prenant directement ou indirectement appui sur ledit point d'appui. En d'autres termes, la came a une forme permettant de définir au moins deux points d'appui, le déplacement de la came grâce au mécanisme d'actionnement permettant de changer le point d'appui sur lequel le support fond ébaucheur, respectivement le support tête de soufflage, prend directement ou indirectement appui lors du réglage, changeant ainsi la position en hauteur du support fond ébaucheur, respectivement du support tête de soufflage. En d'autres termes, il existe au moins deux positions de contact sur la came sur lesquelles le support fond ébaucheur, respectivement le support tête de soufflage, peut prendre directement ou indirectement appui, selon la position de contact choisie, le mécanisme d'actionnement permettant de déplacer la came pour changer de position de contact.

De préférence, selon cette réalisation du dispositif de réglage, la came présente une forme excentrique et est montée en rotation selon un axe de rotation, le mécanisme d'actionnement comprenant un organe de commande manuel à au moins deux positions et un système de transmission agencé entre l'organe de commande manuel et la came et configuré pour tourner la came autour de l'axe de rotation en fonction de la position de l'organe de commande manuel. Cette forme excentrique permet d'obtenir deux positions d'appui sur la came, grâce à une rotation à 180° de celle-ci.

Selon une autre réalisation du dispositif de réglage objet de l'invention, le mécanisme à came comprend une cale sur une face supérieure de laquelle le support fond ébaucheur, respectivement le support tête de soufflage, est apte à prendre directement ou indirectement appui lors de son montage. La cale est mobile en hauteur et comprend une face inférieure venant en appui sur la came. En outre, le mécanisme d'actionnement est configuré pour déplacer la came selon au moins deux positions auxquelles correspondent au moins deux positions d'appui entre la came et la face inférieure de la cale, la came et la face inférieure étant configurées pour faire varier la hauteur de positionnement de ladite cale selon la position d'appui.

Selon cette réalisation du dispositif de réglage, la cale comprend une face inférieure munie d'au moins une cavité et la came est montée en translation horizontale et comprend une face supérieure munie d'au moins une protubérance configurée pour venir se loger dans la au moins une cavité dans une première position de la came selon laquelle la cale est dans une position basse et pour venir en appui sur la face inférieure dans une seconde position de la came selon laquelle la cale est dans une position haute. De préférence, une seule cavité et une seule protubérance sont prévues, des variantes avec plusieurs cavités et plusieurs protubérances respectives restant envisageables. Selon une variante envisageable, l'au moins une cavité pourrait être mise en œuvre sur la face supérieure de la came et l'au moins une protubérance pourrait être mise en œuvre sur la face inférieure de la cale.

Deux variantes sont possibles selon cette réalisation. Selon la première variante, la protubérance et la cavité sont configurées pour que ladite protubérance prenne appui dans un fond de ladite cavité dans la première position de la came, la profondeur de ladite cavité définissant la hauteur de déplacement de la cale lors du déplacement de la came de la première position à la seconde position. Selon la deuxième variante, la protubérance et la cavité sont configurées pour que ladite protubérance soit logée dans ladite cavité et que la face inférieure de la cale soit en contact avec la face supérieure de la came dans la première position de ladite came, la hauteur de la protubérance définissant la hauteur de déplacement de la cale lors du déplacement de la came de la première position à la seconde position. Selon le dispositif de réglage objet de l'invention, le mécanisme à came est configuré pour déplacer la came selon deux positions engendrant une différence de hauteur de positionnement du support fond ébaucheur prenant directement ou indirectement sur ladite came, comprise entre 0,5 mm et 1,2 mm, de préférence entre 0,7 mm et 0,9 mm, de préférence égale à 0,8 mm. Ces plages de valeurs permettent d'obtenir une mise en contrainte convenable du support fond ébaucheur sur l'au moins un moule durant son usage. Bien entendu, des variantes du dispositif de réglage avec d'autres plages de valeurs restent envisageables, en demeurant dans le cadre de l'invention.

Selon le dispositif de réglage objet de l'invention, le mécanisme d'actionnement comprend un système d'indication de la position du mécanisme à came, représentative de la hauteur de positionnement du support fond ébaucheur, respectivement du support tête de soufflage. Cela permet de garantir un réglage convenable de la mise en contrainte du support fond ébaucheur, respectivement du soulagement du support tête de soufflage, l'opérateur pouvant détecter aisément le positionnement de la came correspondant à la position relevée ou à la position abaissée du support fond ébaucheur, respectivement du support tête de soufflage. De préférence, ce système d'indication est visuel, mais un système d'indication sonore restera possible, tel qu'un cliquetis.

Selon une réalisation du dispositif de réglage objet de l'invention, celui-ci comprend un mécanisme de bridage configuré pour fixer ledit dispositif de réglage sur une colonne d'un dispositif ébaucheur, respectivement d'un dispositif finisseur. Cette colonne est présente sur une machine de formage d'articles creux en verre, plus communément appelée machine IS, aussi bien sur le dispositif ébaucheur que sur le dispositif finisseur d'une section de la machine IS. Sur le dispositif ébaucheur, cette colonne permet de déplacer le support fond ébaucheur d'une position de compression d'un ou plusieurs articles à l'état d'ébauche, le support fond ébaucheur étant placé sur un ou des moules ébaucheurs, à une position dégagée du ou des moules ébaucheurs permettant de déplacer le ou lesdits articles à l'état d'ébauche. En outre, selon cette réalisation, le mécanisme à came est configuré pour recevoir en appui un organe de bridage du support fond ébaucheur, respectivement du support tête de soufflage, ou un organe de bridage d'un support intermédiaire sur lequel est bridé le support fond ébaucheur, respectivement le support tête de soufflage.

L'invention concerne également un support intermédiaire d'un support fond ébaucheur ou d'un support tête de soufflage, comprenant un premier organe de bridage configuré pour fixer ledit support intermédiaire sur une colonne d'un dispositif ébaucheur, respectivement d'un dispositif finisseur, un organe de guidage configuré pour recevoir en translation verticale une extrémité du support fond ébaucheur, respectivement du support tête de soufflage, et un second organe de bridage configuré pour fixer ladite extrémité du support fond ébaucheur, respectivement du support tête de soufflage, lors de son montage sur l'organe de guidage. En outre, le support intermédiaire comprend un dispositif de réglage de la hauteur comprenant les caractéristiques précitées, excepté le fait que ledit dispositif de réglage de la hauteur ne comporte pas de mécanisme de bridage, étant donné son agencement directement sur ledit support intermédiaire. En outre, le dispositif de réglage de la hauteur est agencé pour que le mécanisme à came reçoive en appui l'extrémité du support fond ébaucheur, respectivement du support tête de soufflage, positionnée sur l'organe de guidage.

L'invention concerne aussi une première variante d'une machine de formage d'articles creux en verre, dite machine IS, laquelle comprend au moins une section comportant un dispositif ébaucheur muni d'un support fond ébaucheur monté directement ou indirectement sur une colonne au moyen d'un dispositif de réglage qui comprend un mécanisme de bridage configuré pour fixer ledit dispositif de réglage sur la colonne, le mécanisme à came étant configuré pour recevoir en appui un organe de bridage du support fond ébaucheur ou un organe de bridage d'un support intermédiaire sur lequel est bridé le support fond ébaucheur.

L'invention concerne aussi une seconde variante d'une machine de formage d'articles creux en verre, dite machine IS, laquelle comprend au moins une section comportant un dispositif ébaucheur comprenant une colonne, un support fond ébaucheur et un support intermédiaire, le support intermédiaire comprenant un premier organe de bridage configuré pour fixer ledit support intermédiaire sur la colonne, un organe de guidage configuré pour recevoir en translation verticale une extrémité du support fond ébaucheur, un second organe de bridage configuré pour fixer ladite extrémité du support fond ébaucheur lors de son montage sur l'organe de guidage et un dispositif de réglage de la hauteur comprenant les caractéristiques précitées, le dispositif de réglage de la hauteur étant agencé pour que le mécanisme à came reçoive en appui l'extrémité du support fond ébaucheur. De préférence, la machine IS comprend entre une et seize sections et autant de supports intermédiaires agencés sur lesdites sections.

L'invention concerne aussi un procédé de réglage de la contrainte d'un support fond ébaucheur sur une machine de formage d'articles creux en verre comprenant au moins un dispositif ébaucheur formant au moins un moule ébaucheur et comprenant un support fond ébaucheur, une colonne, un support intermédiaire comprenant un premier organe de bridage configuré pour fixer ledit support intermédiaire sur la colonne, un organe de guidage configuré pour recevoir en translation verticale une extrémité du support fond ébaucheur, un second organe de bridage configuré pour fixer ladite extrémité du support fond ébaucheur lors de son montage sur l'organe de guidage et un dispositif de réglage de la hauteur comprenant les caractéristiques précitées, ledit dispositif de réglage de la hauteur étant agencé pour que le mécanisme à came reçoive en appui l'extrémité du support fond ébaucheur positionnée sur l'organe de guidage. Ledit procédé consiste en les étapes suivantes :
a) actionner le mécanisme à came pour le positionner dans une position d'appui haute selon laquelle le support fond ébaucheur sera placé en position haute sur le support intermédiaire,
b) monter l'extrémité du support fond ébaucheur sur l'organe de guidage du support intermédiaire et placer ladite extrémité en appui contre le mécanisme à came en position haute, puis brider le support fond ébaucheur sur le support intermédiaire au moyen du second organe de bridage,
c) poser le support fond ébaucheur simplement sur l'au moins un moule ébaucheur et brider le support intermédiaire sur la colonne au moyen du premier organe de bridage,
d) dégager le support fond ébaucheur de l'au moins un moule ébaucheur,
e) actionner le mécanisme à came pour le positionner dans une position d'appui basse selon laquelle le support fond ébaucheur sera placé en position basse,
f) débrider le support fond ébaucheur du support intermédiaire au moyen du second organe de bridage pour permettre au support fond ébaucheur de descendre par gravité dans l'organe de guidage du support intermédiaire et venir en appui sur le mécanisme à came, dans une position selon laquelle ledit support fond ébaucheur sera mis en contrainte sur l'au moins un moule ébaucheur lors de sa mise en place sur celui-ci,
g) rebrider le support fond ébaucheur sur le support intermédiaire au moyen du second organe de bridage en conservant le mécanisme à came en position d'appui basse.

L'invention concerne aussi un procédé de réglage de la contrainte d'un support fond ébaucheur sur une machine de formage d'articles creux en verre comprenant au moins un dispositif ébaucheur formant au moins un moule ébaucheur et comprenant un support fond ébaucheur, une colonne et un dispositif de réglage de la hauteur selon l'invention, comprenant un mécanisme de bridage configuré pour fixer ledit dispositif de réglage sur la colonne. Ledit procédé consiste en les étapes suivantes :
a) positionner le dispositif de réglage de la hauteur sur la colonne et actionner son mécanisme à came pour le placer dans une position d'appui haute selon laquelle le support fond ébaucheur sera placé en position haute,
b) monter directement ou indirectement, c'est-à-dire au moyen d'un support intermédiaire, le support fond ébaucheur sur la colonne, au-dessus du dispositif de réglage,
c) poser le support fond ébaucheur simplement sur l'au moins un moule ébaucheur et brider le dispositif de réglage sur la colonne avec le mécanisme à came appuyant directement ou indirectement contre le support fond ébaucheur,
d) dégager le support fond ébaucheur de l'au moins un moule ébaucheur,
e) actionner le mécanisme à came pour le placer dans une position d'appui basse selon laquelle le support fond ébaucheur se déplace en position basse,
f) brider directement ou indirectement, c'est-à-dire au moyen d'un support intermédiaire, le support fond ébaucheur sur la colonne, dans une position selon laquelle ledit support fond ébaucheur sera mis en contrainte sur l'au moins un moule ébaucheur lors de sa mise en place sur celui-ci,
g) et, préférentiellement, débrider le mécanisme de bridage du dispositif de réglage pour son retrait, bien que celui-ci puisse demeurer présent sur la colonne.

Ainsi, selon l'invention, quelle que soit la variante mise en œuvre, le dispositif de réglage permet de régler facilement la contrainte du support fond ébaucheur, en activant un mécanisme à came définissant deux positions du support fond ébaucheur, une position relevée et une position abaissé, permettant alors de brider le support fond ébaucheur vis-à-vis de la colonne de la machine IS dans une position d'usage en suivant un processus simple et garantissant un réglage précis de la hauteur en contrainte du support fond ébaucheur.

De manière comparable, le dispositif de réglage peut être utilisé pour régler facilement le support tête de soufflage afin de soulager son appui sur le ou les moules finisseurs du dispositif finisseur sur chaque section de la machine IS. Dans ce cas, les procédés de réglage décrits précédemment pour le réglage de la contrainte d'un support fond ébaucheur s'appliquent, mutatis mutandis, pour le réglage du soulagement d'un support tête de soufflage, en passant toutefois d'une position d'appui basse à une position d'appui haute lors du réglage afin de rehausser légèrement le support tête de soufflage, à l'inverse du support fond ébaucheur qui passe d'une position d'appui haute à une position d'appui basse lors du réglage.

### Brève description des figures

Les caractéristiques et avantages de l'invention apparaîtront à la lecture de la description suivante s'appuyant sur des figures, parmi lesquelles :
- [Fig. 1] : la figure 1 schématise une installation de fabrication d'articles creux en verre ;
- [Fig. 2] : la figure 2 illustre une machine de fabrication d'articles creux en verre, dite machine IS, présente sur une telle installation schématisée en figure 1 ;
- [Fig. 3] : la figure 3 illustre partiellement une première vue d'une section sur la machine IS de la figure 2 ;
- [Fig. 4] : la figure 4 illustre partiellement une seconde vue d'une section sur la machine IS de la figure 2 ;
- [Fig. 5] : la figure 5 illustre partiellement un dispositif ébaucheur montrant les moules ébaucheurs ;
- [Fig. 6] : la figure 6 illustre partiellement un dispositif finisseur montrant les moules finisseurs ;
- [Fig. 7] : la figure 7 illustre trois étapes successives de fabrication d'une ébauche d'article sur le dispositif ébaucheur ;
- [Fig. 8] : la figure 8 illustre le transfert d'une ébauche d'article du dispositif ébaucheur vers le dispositif finisseur ;
- [Fig. 9] : la figure 9 illustre trois étapes successives de fabrication de l'article sur le dispositif finisseur ;
- [Fig. 10] : la figure 10 illustre une vue d'ensemble d'un support fond ébaucheur montée sur une colonne par l'intermédiaire d'un support intermédiaire du support fond ébaucheur, ledit support intermédiaire comprenant un dispositif de réglage de la hauteur du support fond ébaucheur, objet de l'invention ;
- [Fig. 11] : la figure 11 illustre une vue en coupe du dispositif de réglage de la hauteur sur le support intermédiaire du support fond ébaucheur, dans une première position ;
- [Fig. 12] : la figure 12 illustre une vue en coupe du dispositif de réglage de la hauteur sur le support intermédiaire du support fond ébaucheur, dans une seconde position ;
- [Fig. 13] : la figure 13 illustre une vue en coupe d'une première variante du dispositif de réglage de la hauteur sur le support intermédiaire du support fond ébaucheur, dans une seconde position ;
- [Fig. 14] : la figure 14 schématise une partie du dispositif de réglage de la hauteur des figures 11 et 12 dans la première position et dans la seconde position ;
- [Fig. 15] : la figure 15 schématise une partie d'une seconde variante du dispositif de réglage de la hauteur dans la première position et dans la seconde position ;
- [Fig.16] : la figure 16 schématise une partie d'une troisième variante du dispositif de réglage de la hauteur dans la première position et dans la seconde position ;
- [Fig. 17] : la figure 17 illustre une vue tridimensionnelle d'une variante de réalisation du dispositif de réglage de la hauteur et d'un support fond ébaucheur en contact sur une came du dispositif de réglage, le dispositif de réglage et le support fond ébaucheur étant montés directement sur une colonne d'un dispositif ébaucheur ;
- [Fig. 18] : la figure 18 illustre une vue de côté de la figure 17, avec le support fond ébaucheur en contact sur la came du dispositif de réglage, dans une position relevée ;
- [Fig. 19] : la figure 19 illustre une vue de côté de la figure 17, avec le support fond ébaucheur en contact sur la came du dispositif de réglage, dans une position abaissée assurant la contrainte du support fond ébaucheur lors de sa mise en place au-dessus des moules ébaucheurs ;
- [Fig. 20] : la figure 20 illustre, selon un premier plan de coupe, le mécanisme d'actionnement de la came sur le dispositif de réglage de la hauteur des figures 17 à 19 ;
- [Fig. 21] : la figure 21 illustre, selon un second plan de coupe, le mécanisme d'actionnement de la came sur le dispositif de réglage de la hauteur des figures 17 à 19 ;
- [Fig. 22] : la figure 22 illustre partiellement, en coupe, une variante d'un dispositif de réglage de la hauteur mis en œuvre sur un support intermédiaire de support fond ébaucheur, dans une position relevée ;
- [Fig. 23] : la figure 23 correspond à la figure 22, le dispositif de réglage de la hauteur étant cependant dans une position abaissée.

### Description détaillée

Dans la suite de la description, sans indication contraire : les mêmes références sont utilisées pour désigner les mêmes caractéristiques sur les figures et selon les diverses variantes illustrées.

Le terme dispositif de réglage désigne le dispositif de réglage de la hauteur d'un support fond ébaucheur, objet de l'invention, sauf indication apportée dans la description.

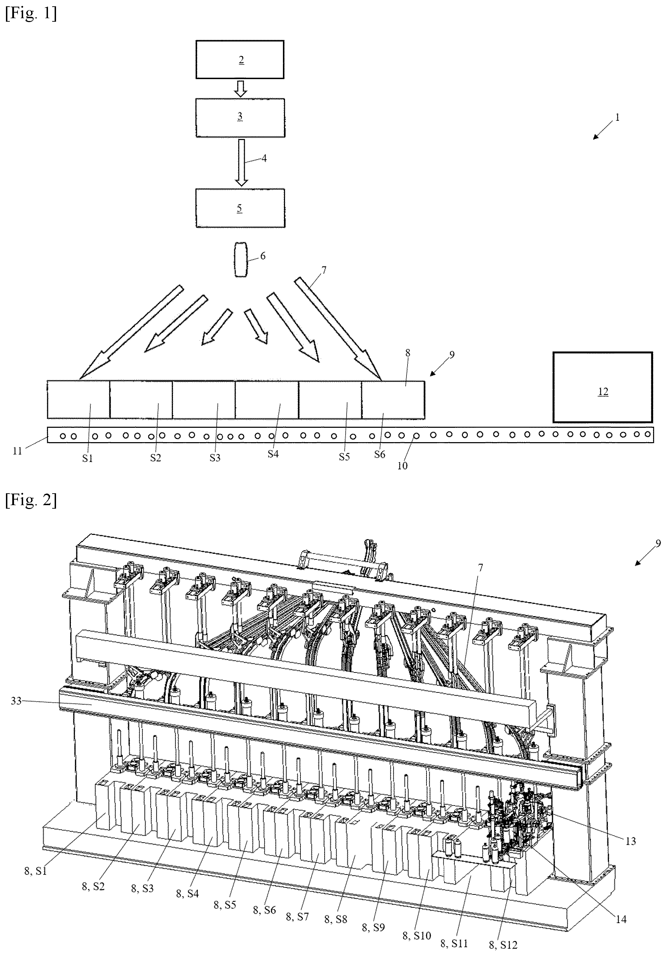

La figure 1 montre une installation de fabrication d'article creux en verre, laquelle est désignée par la suite installation 1. Un article creux en verre est désigné par la suite article. L'installation 1 comprend un poste de composition 2 où sont mélangées les matières premières (sable, calcaire, carbonate de sodium, calcin, verre recyclé ...) qui entrent dans la composition du verre, un four 3 permettant de fondre le mélange de matières premières, le verre en fusion obtenu étant ensuite acheminé au moyen d'un canal 4 qui se termine par un mécanisme 5 de formation et de distribution de paraisons 6 dans des couloirs 7 qui alimentent respectivement des sections 8 d'une machine de formage d'articles creux en verre, laquelle est désignée par la suite machine IS 9. Le nombre de couloirs 7 est proportionnel au nombre de sections 8 sur la machine IS 9 et au nombre d'articles 10 fabriqués simultanément sur une section 8. Les articles 10 sont ensuite transférés des sections 8 sur un convoyeur 11 qui achemine lesdits articles 10 vers une arche de recuisson 12 pour leur refroidissement sous contrôle. Le nombre de sections 8 sur la machine IS 9 peut varier. A titre d'exemple, la figure 2 montre une machine IS 9 qui comprend douze sections 8 (S1 à S12). Le nombre de sections 8 sur la machine IS 9 pourrait être compris entre un et seize, voire plus de seize, sans sortir du cadre de l'invention.

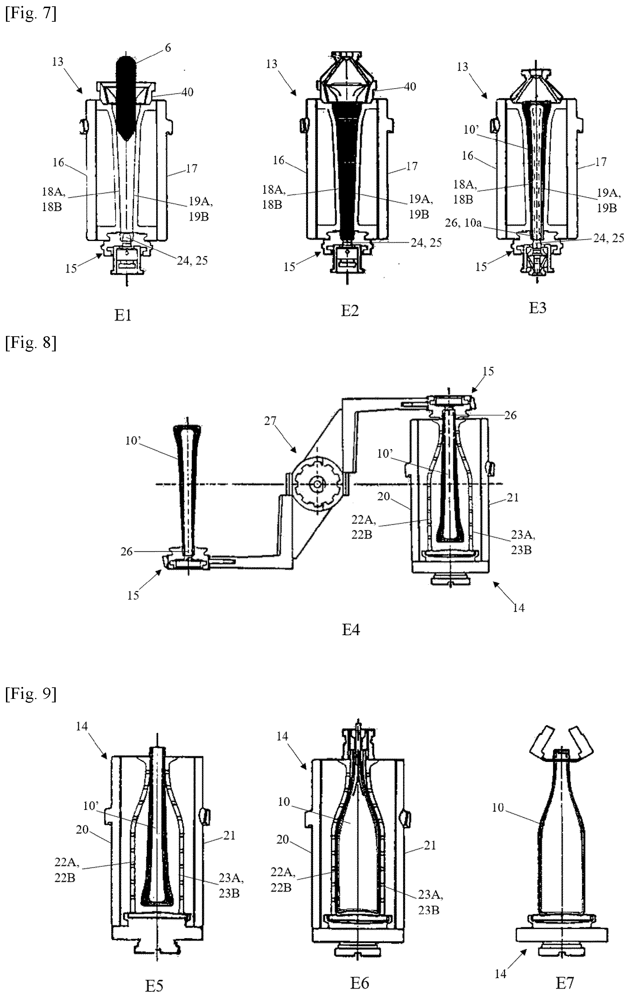

En regard notamment des figures 2 à 4, chaque section 8 comprend un dispositif ébaucheur 13 permettant la formation de deux ébauches d'article 10' et un dispositif finisseur 14 permettant la formation de deux articles 10 avec leur forme définitive. L'ébauche d'article 10' est illustrée figures 7 à 9. Chaque section 8 comprend également un moule de bague 15 qui permet la formation de la bague 10a de l'article 10 et assure également le maintien des deux ébauches d'article 10' durant leur transfert du dispositif ébaucheur 13 vers le dispositif finisseur 14.

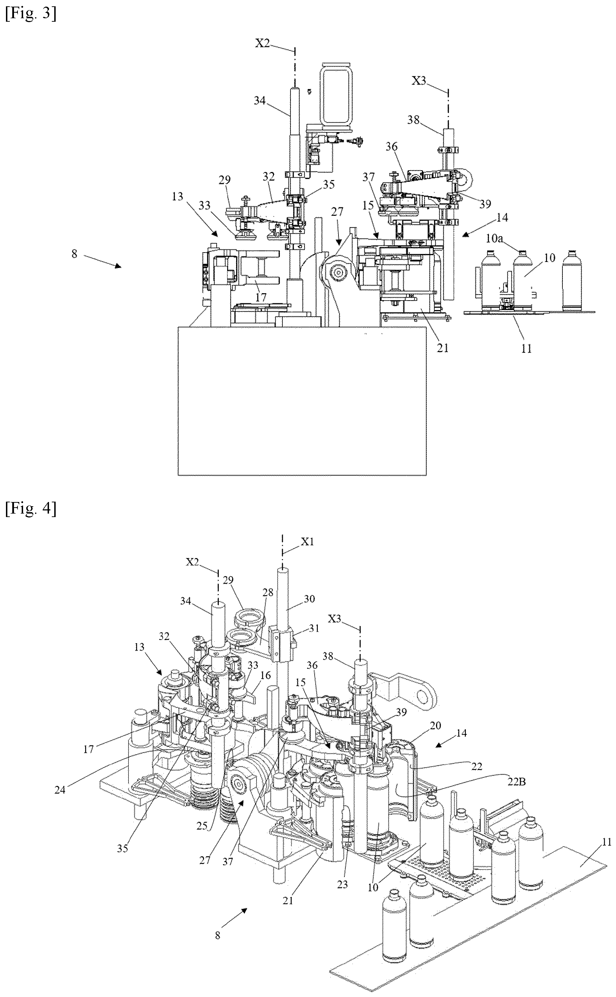

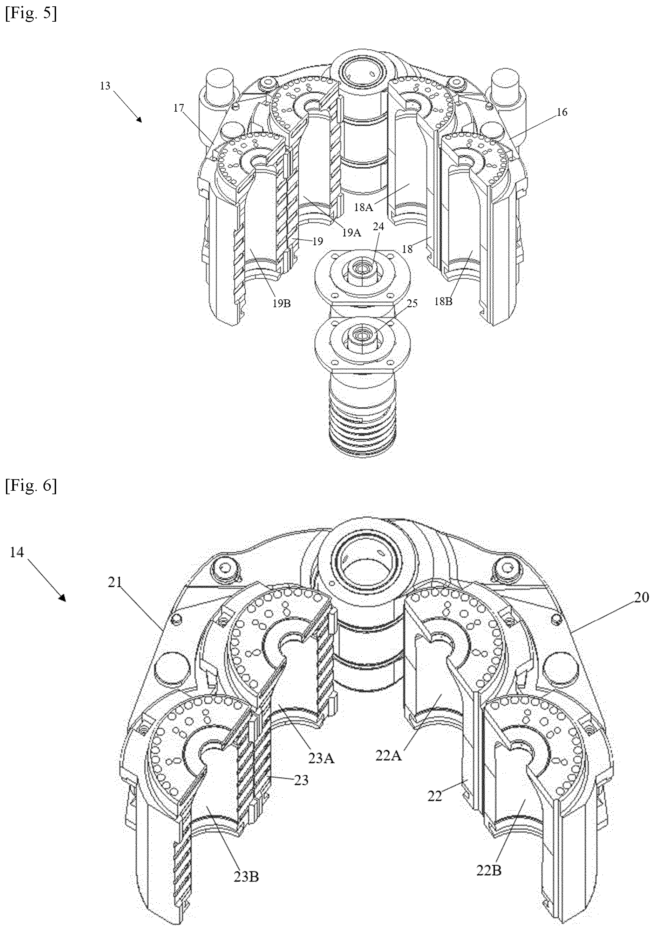

En regard de la figure 5, le dispositif ébaucheur 13 comprend deux parties 16, 17 (illustrées aussi partiellement sur les figures 3 et 4) qui comprennent chacune une empreinte sur leurs faces internes 18, 19. Chacune des deux empreintes comprend deux négatifs 18A, 18B, 19A, 19B formant deux moules ébaucheurs. Lorsque le dispositif ébaucheur 13 est en position fermée, les deux parties 16, 17 sont réunies, ce qui permet de joindre les deux négatifs 18A, 19A et les deux négatifs 18B, 19B pour former les négatifs de deux moules ébaucheurs permettant la réalisation de deux ébauches d'article 10'. Inversement, lorsque le dispositif ébaucheur 13 est en position ouverte, les deux parties 16, 17 sont écartées l'une de l'autre pour ouvrir les deux moules ébaucheurs et dégager les négatifs 18A, 18B, 19A, 19B des deux ébauches d'article 10' maintenus par le moule de bague 15, permettant ainsi de transférer lesdites ébauches d'article 10' vers le dispositif finisseur 14.

De la même manière, en regard de la figure 6, le dispositif finisseur 14 comprend deux parties 20, 21 (illustrées aussi sur les figures 3 et 4) qui comprennent chacune une empreinte sur leurs faces internes 22, 23. Chacune des deux empreintes comprend deux négatifs 22A, 22B, 23A, 23B formant deux moules finisseurs. Lorsque le dispositif finisseur 14 est en position fermée, les deux parties 20, 21 sont réunies, ce qui permet de joindre les deux négatifs 22A, 23A et les deux négatifs 22B, 23B pour former les négatifs de deux moules finisseurs permettant la réalisation de deux articles 10. Inversement, lorsque le dispositif finisseur 14 est en position ouverte, les deux parties 20, 21 sont écartées l'une de l'autre pour ouvrir les deux moules finisseurs et dégager les négatifs 22A, 22B, 23A, 23B afin de permettre soit la mise en place des ébauches d'article 10' dans le dispositif finisseur 14 soit le retrait des articles 10 dudit dispositif finisseur 14.

Le dispositif ébaucheur 13 et le dispositif finisseur 14 de chaque section 8 permettent, dans l'exemple décrit ici, la réalisation de deux articles 10 simultanément ; les empreintes du dispositif ébaucheur 13 et les empreintes du dispositif finisseur 14 pourraient toutefois comporter un nombre différent de négatifs afin de permettre la formation d'un nombre différent de moules ébaucheur et de moules finisseurs, par exemple pour former une à quatre ébauches d'article 10' sur ledit dispositif ébaucheur 13 et un à quatre articles 10 sur ledit dispositif finisseur 14.

Sur la figure 5, le dispositif ébaucheur 13 comprend également deux poinçons 24, 25 placés respectivement au centre, c'est-à-dire sur le plan de joint entre les deux parties 16, 17 dudit dispositif ébaucheur 13 lorsque celui-ci est en position fermée, en correspondance avec les négatifs 18A, 18B, 19A, 19B sur les empreintes 18, 19. Le nombre de poinçons dépend du nombre de négatifs d'ébauche d'article 10' sur le dispositif ébaucheur 13 et forment avec ceux-ci les moules ébaucheurs sur ledit dispositif ébaucheur 13.

Les figures 7 à 9 expliquent les étapes de formage d'un article 10 depuis l'insertion de la paraison 6 dans un moule ébaucheur du dispositif ébaucheur 13 jusqu'à sa sortie d'un moule finisseur du dispositif finisseur 14. La figure 7 montre les étapes E1, E2, E3 successives de chargement de la paraison 6, de compression et de perçage réalisées dans un des négatifs (association des parties de négatif 18A-19A ou 18B-19B) d'ébauche d'article 10'. Durant ces étapes successives de la figure 7, le moule de bague 15 et le poinçon 24, 25 permettent de former complètement la bague 26 de l'ébauche d'article 10'. La figure 8 montre l'étape E4 de transfert de l'ébauche d'article 10' vers le dispositif finisseur 14, réalisée au moyen du moule de bague 15 qui tient l'ébauche d'article 10' par la bague 26 et se déplace vers le dispositif finisseur 14 grâce à un bras de transfert 27. La figure 9 montre les étapes E5, E6, E7 successives d'allongement, de soufflage et d'extraction de l'article 10 qui est ensuite transféré sur le convoyeur 11.

En regard des figures 3 et 4, le dispositif ébaucheur 13 comprend un bras 28 muni de deux entonnoirs 29, ce bras 28 étant fixé sur une première colonne 30 au moyen d'une première bride 31, ladite première colonne 30 s'étendant verticalement selon un premier axe X1 et étant montée en translation et en rotation selon ce premier axe X1 de sorte à permettre le déplacement des entonnoirs 29 d'une position d'usage où lesdits entonnoirs 29 sont placés au-dessus et contre les moules ébaucheurs pour permettre l'introduction des paraisons dans lesdits moules ébaucheur, comme l'illustre l'étape E1 de la figure 7, vers une position dégagée illustrée figures 3 et 4. Le dispositif ébaucheur 13 comprend un support fond ébaucheur 32 qui comprend deux premières bouches de soufflage 33, le support fond ébaucheur 32 étant fixé sur une seconde colonne 34 au moyen d'un support intermédiaire 35 du support fond ébaucheur 32, ladite seconde colonne 34 s'étendant verticalement selon un second axe X2 et étant montée en translation et en rotation selon ce second axe X2 de sorte à permettre le déplacement des premières bouches de soufflage 33 dans une position d'usage où lesdites bouches de soufflage 33 sont placées d'abord au-dessus et contre les entonnoirs 29 afin de réaliser la compression des ébauches d'article 10', comme l'illustre l'étape E2 de la figure 7, puis au-dessus et contre les moules ébaucheurs une fois les entonnoirs 29 retirés afin de réaliser le perçage des ébauches d'article 10', comme l'illustre l'étape E3 de la figure 7, ou dans une position dégagée illustrée figures 3 et 4 afin de permettre le déplacement des ébauches d'articles 10' vers le dispositif finisseur 14 au moyen du moule de bague 15 et du bras de transfert 27 (étape E4 de la figure 8). Bien entendu, le nombre de premières bouches de soufflage 33 sur le support fond ébaucheur 32 dépend du nombre de moules ébaucheurs sur le dispositif ébaucheur 13.

En regard des figures 3 et 4, le dispositif finisseur 14 comprend un support tête de soufflage 36 qui comprend deux secondes bouches de soufflage 37, le support tête de soufflage36 étant fixé sur une troisième colonne 38 au moyen d'un support 39 du support tête de soufflage 36, appelé ensuite second support 39, ladite troisième colonne 38 s'étendant verticalement selon un troisième axe X3 et étant montée en translation et en rotation selon ce troisième axe vertical X3 de sorte à permettre le déplacement des secondes bouches de soufflage 37 dans une position d'usage où lesdites secondes bouches de soufflage 37 sont placées au-dessus et contre les moules finisseurs une fois l'allongement de l'ébauche d'article 10' réalisé (étape E5 de la figure 9) et le moule de bague 15 retiré des moules finisseurs par le bras de transfert 27 qui le repositionne au-dessus des poinçons 24, 25 sur le dispositif ébaucheur 13, lesdites secondes bouches de soufflage 37 placées au-dessus et contre les moules finisseurs réalisant alors le soufflage de l'article 10 (étape E6 de la figure 9), ou dans une position dégagée illustrée figures 3 et 4 afin de permettre le déplacement des ébauches d'articles 10' vers le dispositif finisseur 14 au moyen de la bague 26 et du bras de transfert 27 et le déplacement des articles 10 vers le convoyeur 11. Bien entendu, le nombre de secondes bouches de soufflage 37 sur le support tête de soufflage 36 dépend du nombre de moules finisseurs sur le dispositif finisseur 14.

Les mises en place des premières bouches de soufflage 33 sur les moules ébaucheurs doivent être précises afin d'éviter des fuites durant les étapes de compression et de perçage sur le dispositif ébaucheur 13. La raison principale de telles fuites provient des dilatations sur les bouches de soufflage 33, 37 des supports fonds ébaucheurs 32, ces dilatations étant dues aux températures sur les moules ébaucheurs. Pour compenser ces dilatations, les supports fonds ébaucheurs 32 sont contraints sur les moules ébaucheurs. Le réglage de la contrainte d'un support fond ébaucheur 32 s'effectue à froid, lors de son montage sur la colonne 34. Ce montage du support fond ébaucheur 32 sur la colonne 34 peut être réalisé directement ou indirectement, au moyen d'un support intermédiaire 35 qui présente pour avantage de permettre un changement rapide du support fond ébaucheur 32.

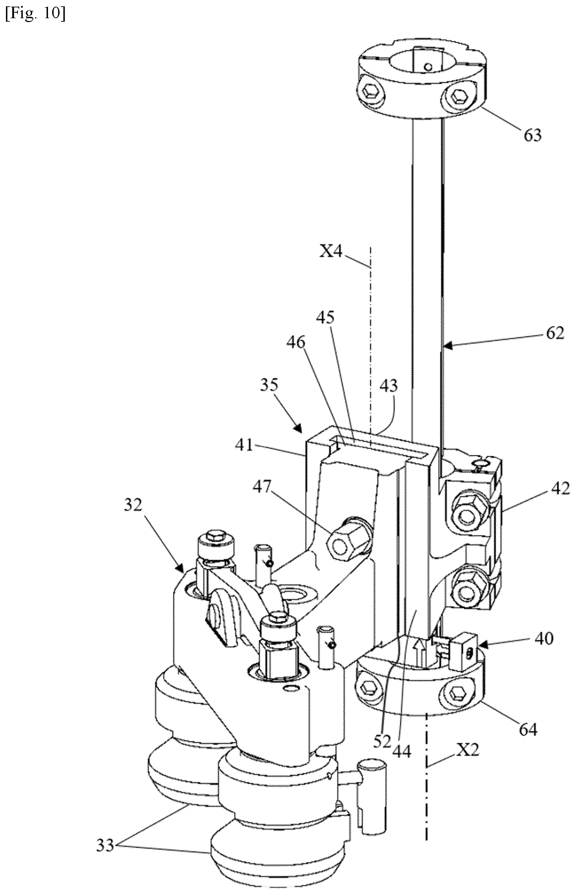

La description qui suit, à l'appui des figures 10 à 16, s'applique au support fond ébaucheur 32 fixée sur la seconde colonne 34 au moyen du support intermédiaire 35 ; ce montage est donc réalisé sur le dispositif ébaucheur 13 de chacune des sections 8 de la machine IS 9. La figure 10 montre le support fond ébaucheur 32 monté sur un support intermédiaire 35, ce support intermédiaire 35 étant lui-même destiné à être monté sur la colonne 34 qui s'étend selon l'axe X2, ladite colonne 34 étant déplaçable en translation et en rotation selon cet axe X2. La colonne 34 n'est pas illustrée sur la figure 10, mais apparaît sur la figure 4. Le support intermédiaire 35 comprend un dispositif de réglage 40 qui permet de réaliser la contrainte précitée du support fond ébaucheur 32 lors de son montage sur la colonne 34. Le changement des supports fonds ébaucheurs 32 sur les dispositifs ébaucheurs 13 intervient en adéquation avec le changement des moules ébaucheurs sur les dispositifs ébaucheurs 13, lors d'un changement de fabrication d'articles 10 sur la machine IS 9. Ce dispositif de réglage 40 est monté sur un corps 41 du support intermédiaire 35, ledit corps 41 étant fixé sur la colonne 34 au moyen d'un premier organe de bridage 42 agencé sur une face arrière 43 dudit corps 41. Le corps 41 comprend sur sa face avant 44 une rainure 45 s'étendant verticalement et formant une mortaise, ladite rainure 45 recevant à coulissement dans le sens vertical, selon un quatrième axe X4, une base 46 du support fond ébaucheur 32, ladite base 46 formant un tenon. Un second organe de bridage 47 permet de bloquer la base 46 dans la rainure 45 pour fixer le support fond ébaucheur 32 sur le support intermédiaire 35. La fixation finale du support fond ébaucheur 32 sur le support intermédiaire 35 intervient une fois le réglage de la contrainte réalisé au moyen du dispositif de réglage 40.

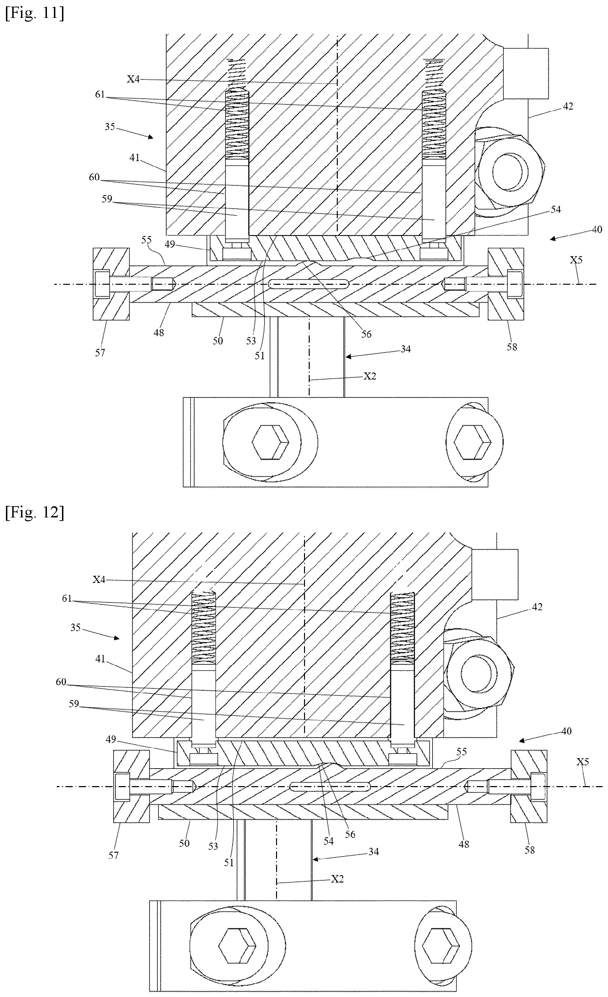

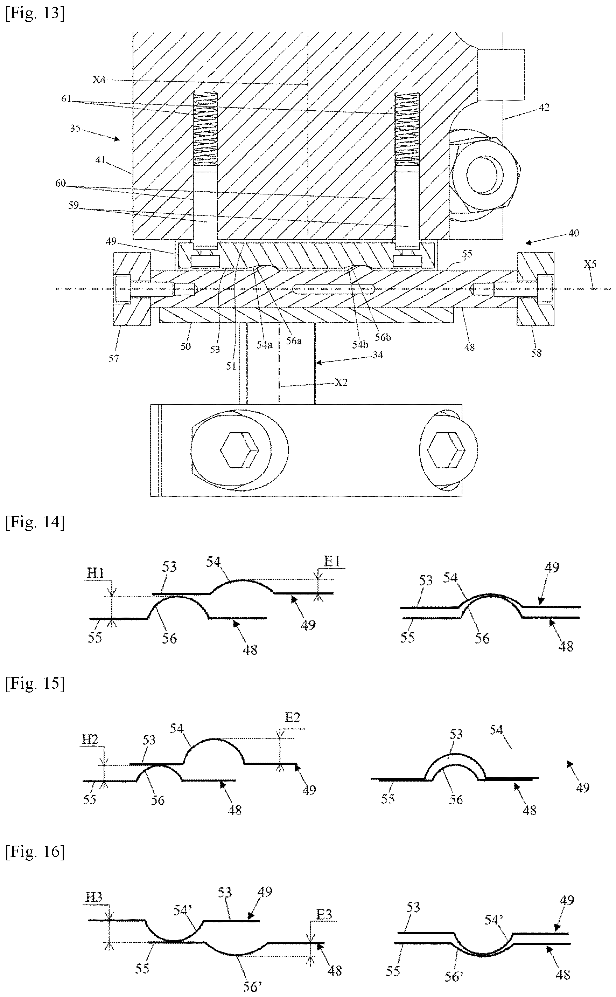

Les figures 11 et 12 montrent en coupe une première réalisation du dispositif de réglage 40 sur le support intermédiaire 35. Ce dispositif de réglage 40 comprend une came 48, une cale 49 et une pièce de réception 50 dans laquelle sont montées la came 48 et la cale 49, ladite pièce de réception 50 étant fixée en partie inférieure du corps 41, sous la rainure 45, de sorte qu'une face supérieure 51 de la cale 49 communique avec la rainure 45 et reçoive en appui une face inférieure 52 (illustrée figure 10) de la base 46 du support fond ébaucheur 32. La cale 49 est guidée en translation verticale selon le quatrième X4 vis-à-vis du corps 41, au moyen de deux pions 59 montés coulissant dans deux trous 60 au fond desquels sont logés deux ressorts 61 monté en compression de sorte à pousser la cale 49 vers le bas et la maintenir ainsi en appui contre la came 48. La came 48 est guidée en translation horizontale selon un cinquième axe X5 perpendiculaire à l'axe X4, à l'intérieure de la pièce de réception 50. La cale 49 comprend une face inférieure 53 qui comporte une cavité 54 et la came 48 comprend une face supérieure 55 qui comporte une protubérance 56 qui demeure en appui sur la face inférieure 53 et sur la cavité 54 durant le déplacement de la came 48 le long du cinquième axe X5 entre une position de réglage et une position de contrainte. Dans la position de réglage de la came 48, illustrée en figure 11, la protubérance 56 est en appui sur la face inférieure 53 de la cale 49 qui est alors placée dans une position relevée (position haute). Inversement, dans la position de contrainte de la came 48, illustrée en figure 12, la protubérance 56 est en appui dans le fond de la cavité 54 de la cale 53 qui descend selon l'axe X4 et se place dans une position abaissée (position basse). La course de déplacement en hauteur de la cale 49 durant le déplacement de la came 48 de la position de réglage à la position de contrainte est définie par la profondeur E1 de la cavité 54 qui est supérieure à la hauteur H1 de la protubérance 56, comme le montre la figure 14 illustrant les deux positions de ladite protubérance 56 et de ladite came 54, pour cette première réalisation des figures 11 et 12. Ainsi, la cale 49 se déplace d'une hauteur correspondant à la profondeur E1 lors de son déplacement de la position relevée à la position abaissée. De préférence, cette profondeur E1 est comprise entre 0,5 mm et 1,2 mm, de préférence entre 0,7 mm et 0,9 mm, de préférence égale à 0,8 mm.

Tel qu'illustré sur la figure 10, le support intermédiaire 35 comprend également une règle 62 agencée parallèlement à l'axe X2 et comprenant à ses deux extrémités deux brides 63, 64 permettant sa fixation sur la colonne 34. Cette règle 62 permet d'assurer un repositionnement angulaire identique du support intermédiaire 35 sur la colonne 34.

Le réglage de la contrainte du support fond ébaucheur 32 est mise en œuvre de la manière suivante, lors de l'installation d'un support fond ébaucheur 32 au moyen d'un support intermédiaire 35, sur une section 8 de la machine IS 9 :
Etape a) : l'installateur positionne la came 48 du dispositif de réglage 40 dans la position de réglage selon laquelle la cale 49 se déplace dans une position relevée (position haute) du fait que la protubérance 56 est en contact avec la face inférieure 53 de ladite cale 49.
Etape b) : l'installateur monte la base 46 à l'extrémité du support fond ébaucheur 32 dans la rainure 45 - constituant un organe de guidage - et place la face inférieure 52 de ladite base 46 en appui contre la face supérieure 51 de la cale 49 disposée en position relevée, puis ledit installateur bride le support fond ébaucheur 32 avec le support intermédiaire 35 au moyen du second organe de bridage 47.
Etape c) : l'installateur place le support fond ébaucheur 32 en position d'utilisation, c'est-à-dire avec les bouches de soufflage 33 en appui sur les moules ébaucheurs, puis ledit installateur bride le support intermédiaire 35 sur la colonne 34 au moyen du premier organe de bridage 42.
Etape d) : l'installateur dégage le support fond ébaucheur 32 du moule ébaucheur.
Etape e) : l'installateur déplace la came 48 dans la position de contrainte permettant de déplacer la cale 49 en position abaissée (position basse) sous la contrainte des ressorts 61, du fait que la protubérance 56 peut s'engager dans la cavité 54.
Etape f) : l'installateur débride le support fond ébaucheur 32 du support intermédiaire 35 en desserrant le second organe de bridage 47, ce qui permet à la base 46 du support fond ébaucheur 32 de descendre par gravité dans la rainure 45 (organe de guidage) du support intermédiaire 35 jusqu'à ce que la face inférieure 52 de la base 46 vienne en appui contre la face supérieure 51 de la came 49, le support fond ébaucheur 32 se trouvant alors dans une position de contrainte selon laquelle les bouches de soufflage 33 seront en contrainte sur les moules ébaucheurs lors de leur mise en place sur ceux-ci.
Etape g) : l'installateur rebride le support fond ébaucheur 32 sur le support intermédiaire 35 au moyen du second organe de bridage 47 en conservant la cale 49 en position abaissée.

Afin de permettre à l'installateur de détecter facilement le déplacement de la came 48 dans la position de réglage et dans la position de contrainte, le dispositif de réglage 40 comprend des indicateurs mis en œuvre de préférence par deux pièces 57, 58 aux deux extrémités respectives de la came 48, ces deux pièces 57, 58 étant différentes visuellement, par exemple en présentant des marquages différents ou des couleurs différentes, voire d'autres indicateurs visuels permettant de différencier les deux positions de la came 48. Un indicateur sonore pourrait aussi être prévu, par exemple un bruit de cliquetis selon la position atteinte par la came 48.

Le mode de réalisation illustré en référence aux figures 11, 12 et 14 n'est pas limitatif, d'autres variantes étant envisageables dans le cadre de l'invention. A titre d'exemple, sur la figure 13, deux protubérances 56a, 56b sont mises en œuvre sur la face supérieure 55 de la came 48 et deux cavités 54a, 54b sont mises en œuvre sur la face inférieure 53 de la cale 49, les deux protubérances 56a, 56b s'engageant respectivement dans les deux cavités 54a, 54b dans la position de contrainte de la came 48. La profondeur des cavités 54a, 54b définit également la hauteur de déplacement de la cale 49, comme pour le mode de réalisation des figures 11, 12 et 14.

Cette hauteur de déplacement de la cale 49, lors du déplacement de la came 48 de la position de réglage à la position de contrainte, peut être mise en œuvre différemment que sur les modes de réalisation des figures 11, 12 et 14 et de la figure 13. Sur la figure 15, cette hauteur de déplacement de la cale 49 est définie par la hauteur H2 de la protubérance 56 sur la face supérieure 55 de la came 48 qui est plus importante que la profondeur E2 de la cavité 4 sur la face inférieure 53 de la cale 49. Dans ce cas, la hauteur H2 est de préférence comprise entre 0,5 mm et 1,2 mm, de préférence entre 0,7 mm et 0,9 mm, de préférence égale à 0,8 mm. En position de réglage de la came 48, la protubérance 56 est en appui sur la face inférieure 53 de la cale 49 et en position de contrainte de la came 48, la protubérance 56 est placée dans la cavité 54, la cale 49 descendant jusqu'à ce que sa face inférieure 53 vienne en contact de la face supérieure 55 de la came 48.

La figure 16 montre une autre variante selon laquelle la protubérance 56' est mise en œuvre sur la face inférieure 53 de la cale 49 et la cavité 54' est mise en œuvre sur la face supérieure 55 de la came 48. Dans la position de réglage de la came 48, la protubérance 56' de la cale 49 est en appui sur la face supérieure 55 de la came 48 et dans la position de contrainte de la came 48, la protubérance 56' est en appui dans le fond de la cavité 54' sur la face supérieure 55 de la came 58. Dans ce cas, la profondeur E3 de la cavité 54' définit également la hauteur de déplacement de la cale 49 lors du déplacement de la came 48 de la position de réglage à la position de contrainte, ladite la profondeur E3 de la cavité 54' étant supérieure à la hauteur H3 de la protubérance 56'.

La description qui précède n'est pas limitative, d'autres variantes du dispositif de réglage 40 pouvant être envisagées dans le cadre de l'invention, notamment en modifiant la forme de la came 48, la forme de la cale 49 et les moyens de transmission entre la came 48 et la cale 49 permettant de déplacer en hauteur ladite cale 49 lors du déplacement de la came 48 d'une position de réglage à une position de contrainte, ladite cale 49 recevant en appui la base 46 du support fond ébaucheur 32. Il est aussi possible de prévoir des versions du dispositif de réglage 40 avec une came uniquement, c'est-à-dire sans la présence d'une cale, la base 46 du support fond ébaucheur 32 venant en contact sur la came, dans ce cas.

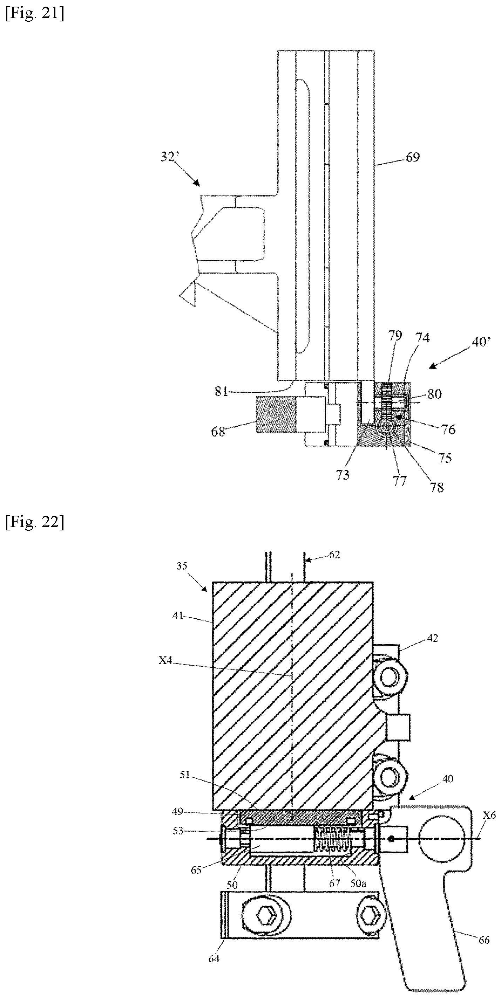

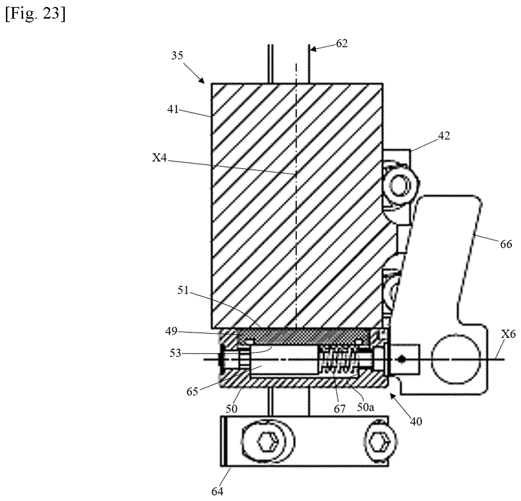

A titre d'exemple, sur les figures 22 et 23, le dispositif de réglage 40 agencé sur le support intermédiaire 35 comprend une came 65 qui est montée rotative selon un axe X6 et qui est actionnée par une poignée 66 pouvant être déplacée selon deux positions représentées sur lesdites figures 22 et 23. La came 65 est assujettie à la poignée 66 au moyen d'une tige 67 montée en liaison pivot glissant sur l'axe X6 vis-à-vis de la pièce de réception 50 du dispositif de réglage 40. Une traction suivie d'une rotation à 180 degrés sur la poignée permettant de déverrouiller le mécanisme et de changer la position de contact de la came 65 vis-à-vis de la face inférieure 53 de la cale 49. Un ressort 67 travaille en compression entre la came 65 et une paroi 50a de la pièce de réception 50 et permet de ramener la poignée 66 dans une position de verrouillage sur la pièce de réception 50. La came 65 présente une forme excentrique dans un plan de coupe transversal (non illustré), permettant de déplacer en hauteur la cale 49 selon l'axe X4, d'une position relevée illustrée en figure 22 à une position abaissée illustrée en figure 23, lors de la rotation à 180 degrés autour de l'axe X6, de la poignée 66. Le support fond ébaucheur 32, dont la face inférieure 52 de la base 46 vient en appui sur la face supérieure 51 de la cale 49, peut donc également passer d'une position relevée à une position abaissée, pour le réglage de la contrainte des bouches de soufflage 33.

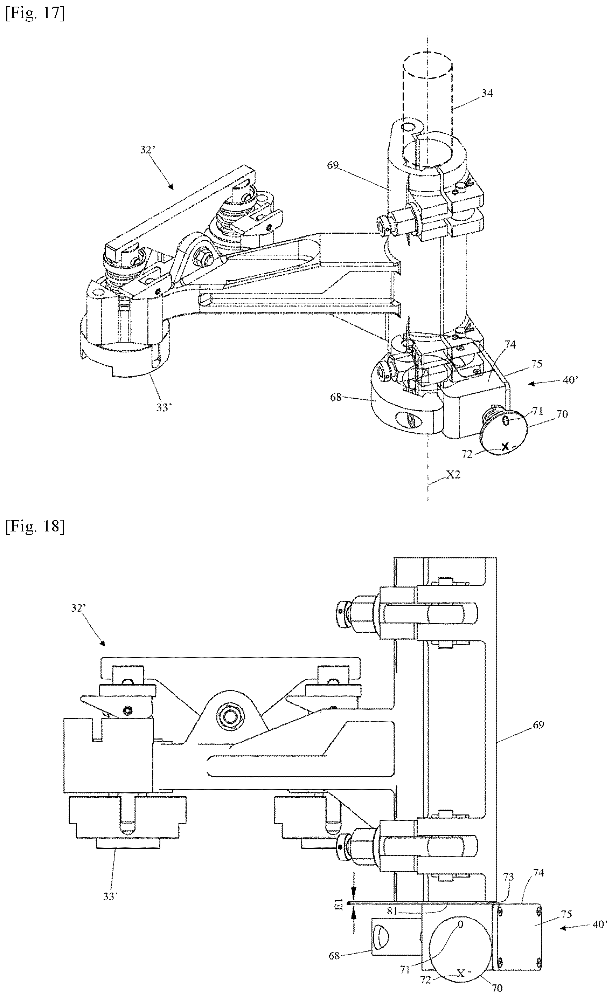

Sur la variante des figures 17 à 21, le dispositif de réglage 40' est indépendant et se monte directement sur la colonne 34 d'axe X2 grâce à un troisième organe de bridage 68. Sur la figure 17, le support fond ébaucheur 32' est conçu pour être monté directement sur la colonne 34 d'axe X2 au moyen d'un quatrième organe de bridage 69 agencé à une extrémité opposée de celle recevant les bouches de soufflage 33'. On pourrait toutefois prévoir la présence d'un support intermédiaire qui présenterait des caractéristiques comparables à celles du support intermédiaire 35 décrit précédemment, excepté qu'il ne comporterait pas le dispositif de réglage 40, dans quel cas l'organe de bridage du support intermédiaire serait placé au-dessus du dispositif de réglage 40' sur la colonne 34, à la place du quatrième organe de bridage 69, et ledit support intermédiaire recevrait un support fond ébaucheur similaire au support fond ébaucheur 32 décrit précédemment.

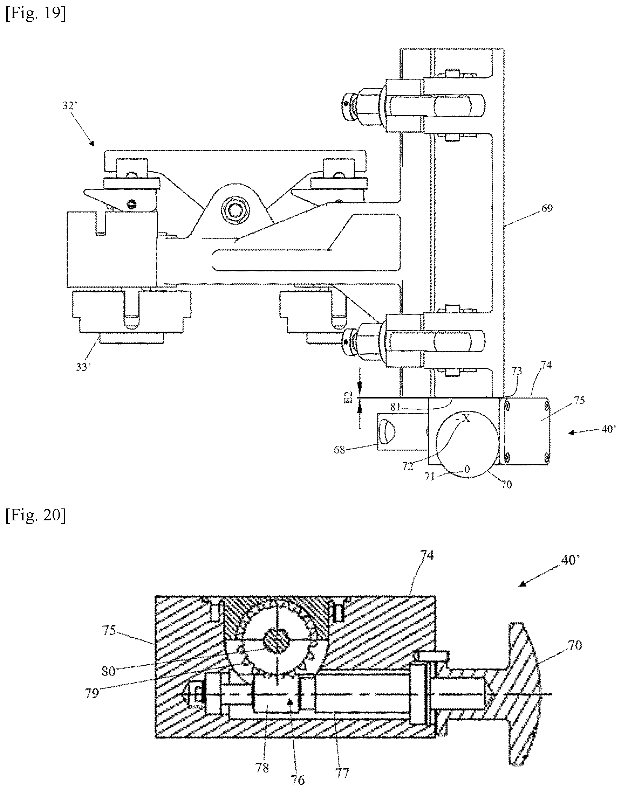

En regard des figures 18 et 19, le dispositif de réglage 40' comprend une poignée 70 qui comprend deux repères 71, 72 indiquant deux valeurs « 0 » et « -X », X étant une valeur comprise entre 0,5 mm et 1,2 mm, de préférence entre 0,7 mm et 0,9 mm, de préférence égale à 0,8 mm. Ces deux repères 71, 72 sont représentatifs de deux positions de la poignée 70. Dans une première position illustrée en figure 18, la poignée 70 est sur le premier repère 71 indiquant « 0 », correspondant à une position relevée du support fond ébaucheur 32' dont le quatrième organe de bridage 69 vient en appui contre une came 73 du dispositif de réglage 40', disposée dans une première position de contact, et maintient ainsi un espace E1 par rapport à une face supérieure 74 d'un corps 75 du dispositif de réglage 40'. Dans une seconde position illustrée en figure 19, la poignée 70 étant pivotée à 180 degrés de sorte à être positionnée sur le second repère 72 indiquant « -X » correspondant à une position abaissée du support fond ébaucheur 32' dont le quatrième organe de bridage 69 vient en appui contre une came 73 du dispositif de réglage 40', disposée dans une seconde position de contact, et maintient ainsi un espace E2 par rapport à une face supérieure 74 d'un corps 75 du dispositif de réglage 40'. La différence entre les espaces E1 et E2 correspond à ladite valeur X.

Les figures 20 et 21 montrent le mécanisme 76 mis en œuvre entre la poignée 70 et la came 73, permettant lors d'une rotation de la poignée 70 de 180 degrés, de faire tourner la came 73 de préférence de 180 degrés également, la came 73 présentant une forme excentrique dans un plan de coupe transversal (non illustré). Le mécanisme à came 76 comprend une tige 77 assujettie à la poignée 70 et comprenant une portion dentée 78 engrenant avec un pignon 79 qui est assujetti à un axe 80 solidaire de la came 73. Bien entendu, d'autres mécanismes à came pourraient être envisagés entre la poignée 70 et la came 73. La poignée 70 pourrait être remplacée par une autre, similaire à la poignée 66 sur les figures 22 et 23. Une telle conception du mécanisme à came 76 pourrait être envisagée sur le dispositif de réglage 40 décrit en regard des figures 10 à 16 et, inversement, le dispositif de réglage 40' pourrait comprendre l'une des conceptions de mécanisme à came du dispositif de réglage 40, décrite en figures 10 à 16 ou en figures 22 et 23.

Lorsque le dispositif de réglage 40' est monté directement sur la colonne 34, le procédé de réglage de la contrainte s'effectue de la manière suivante :
- Etape a) : positionner le dispositif de réglage 40' sur la colonne 34 et actionner le mécanisme à came 76 pour que la came 73 soit dans une position d'appui haute selon laquelle le support fond ébaucheur 32' sera placé en position haute (position relevée),
- Etape b) : monter le support fond ébaucheur 32' sur la colonne 34, au-dessus du dispositif de réglage 40', une variante avec un support intermédiaire étant possible, comme décrit précédemment,

Etape c) : placer le support fond ébaucheur 32' en position d'utilisation sur l'au moins un moule ébaucheur, en l'espèce sur les deux moules ébaucheurs, en plaçant les bouches de soufflage 33' sur les moules ébaucheurs, puis brider le troisième organe de bridage 68 du dispositif de réglage 40' sur la colonne 34 avec la came 73 appuyant contre la face inférieure 81 du quatrième organe de bridage 69 du support fond ébaucheur 32',
Etape d) : dégager le support fond ébaucheur 32' des moules ébaucheurs,
Etape e) : actionner le mécanisme à came 76 avec la poignée 70 pour positionner la came 73 dans une position d'appui basse, le support fond ébaucheur 32' se déplaçant en position basse (position abaissée),
Etape f) : brider le quatrième organe de bridage 69 du support fond ébaucheur 32' sur la colonne 34, le support fond ébaucheur 32' étant dans une position de contraintes selon laquelle les bouches de soufflage 33' seront contraints sur les moules ébaucheurs lors de leur mise en place sur ceux-ci,
Etape g) : débrider le dispositif de réglage 40' pour son retrait de la colonne 34.

La conception de ce dispositif de réglage 40' permet avantageusement sa réutilisation pour le réglage de la contrainte du support fond ébaucheur 32' sur toutes les sections 8 de la machine IS 9.

La description qui précède met en exergue différentes variantes de conception envisageables du dispositif de réglage 40, 40', donnée à titre d'exemples non limitatif. Cette description met également en évidence les avantages qu'apporte un tel dispositif de réglage, assurant une précision et une facilité de réglage de la mise en contrainte sans risque de détérioration du support fond ébaucheur 32, 32' durant la réalisation du réglage.

La description qui précède décrit l'application du dispositif de réglage 40, 40' pour le réglage des supports fonds ébaucheurs 32, 32' sur les dispositifs ébaucheurs 13 des sections 8 de la machine IS 9. Son application est cependant également envisageable pour le réglage des supports têtes de soufflage 36 sur les dispositifs finisseurs 14 des sections 8 de la machine IS 9, non pas pour régler la contrainte des supports fonds ébaucheurs 32, 32' venant en appui sur les moules ébaucheurs formés par les deux parties 16, 17 réunies de chaque dispositif ébaucheur 13, mais pour régler le soulagement des supports têtes de soufflage 36 venant en appui sur les moules finisseurs formés par les deux parties 20, 21 réunies sur chaque dispositif finisseur 14. Dans ce cas le dispositif de réglage 40, 40' est d'abord placé dans la position abaissée (position d'appui basse) puis dans la position rehaussée (position d'appui haute), durant le réglage du soulagement, contrairement au réglage de la contrainte pour le réglage du support fond ébaucheur 32, 32'. De la même manière, un support intermédiaire, comparable au support intermédiaire 35, pourra être prévu pour le montage du support tête de soufflage 36 sur la colonne 38 du dispositif finisseur 14.

## Revendications

1. Dispositif de réglage (40, 40') de la hauteur d'un support fond ébaucheur (32, 32'), ou d'un support tête de soufflage (36), **caractérisé en ce qu'**il comprend un mécanisme à came muni d'une came (48, 65, 73) sur laquelle le support fond ébaucheur (32, 32'), respectivement le support tête de soufflage (36), est apte à prendre directement ou indirectement appui lors de son montage et un mécanisme d'actionnement configuré pour déplacer la came (48, 65, 73) selon au moins deux positions, le mécanisme à came étant configuré pour placer selon au moins deux hauteurs le support fond ébaucheur (32, 32'), respectivement le support tête de soufflage (36), prenant directement ou indirectement appui sur ladite came (48, 65, 73), en fonction de la position de ladite came.

2. Dispositif de réglage (40, 40') selon la revendication 1, dans lequel la came (48, 65, 73) est configurée pour disposer d'au moins deux points d'appui sur lesquels le support fond ébaucheur (32, 32'), respectivement le support tête de soufflage (36), est apte à prendre directement ou indirectement appui, le mécanisme d'actionnement étant configuré pour changer le point d'appui de la came (48, 65, 73) auquel correspond une hauteur de positionnement du support fond ébaucheur (32, 32'), respectivement du support tête de soufflage (36), prenant directement ou indirectement appui sur ledit point d'appui.

3. Dispositif de réglage (40, 40') selon la revendication 2, dans lequel la came (65, 73) présente une forme excentrique et est montée en rotation selon un axe de rotation, le mécanisme d'actionnement comprenant un organe de commande manuel (66, 70) à au moins deux positions et un système de transmission agencé entre l'organe de commande manuel (66, 70) et la came (65, 73) et configuré pour tourner la came autour de l'axe de rotation en fonction de la position de l'organe de commande manuel.

4. Dispositif de réglage (40) selon la revendication 1, dans lequel le mécanisme à came comprend une cale (49) sur une face supérieure de laquelle le support fond ébaucheur (32), respectivement le support tête de soufflage (36), est apte à prendre directement ou indirectement appui lors de son montage, la cale (49) étant mobile en hauteur et comprenant une face inférieure venant en appui sur la came (48, 65), le mécanisme d'actionnement étant configuré pour déplacer la came (48, 65) selon au moins deux positions auxquelles correspondent au moins deux positions d'appui entre la came (48, 65) et la face inférieure de la cale (49), la came et la face inférieure étant configurées pour faire varier la hauteur de positionnement de ladite cale selon la position d'appui.

5. Dispositif de réglage (40) selon la revendication 4, dans lequel la cale (49) comprend une face inférieure (53) munie d'au moins une cavité (54, 54a, 54b) et la came (48) est montée en translation horizontale et comprend une face supérieure (55) munie d'au moins une protubérance (56, 56a, 56b) configurée pour venir se loger dans la au moins une cavité (54, 54a, 54b) dans une première position de la came (48) selon laquelle la cale (49) est dans une position basse et pour venir en appui sur la face inférieure (53) dans une seconde position de la came (48) selon laquelle la cale (49) est dans une position haute.

6. Dispositif de réglage (40, 40') selon l'une quelconque des revendications 1 à 5, dans lequel le mécanisme à came est configuré pour déplacer la came (48, 65, 73) selon deux positions engendrant une différence de hauteur de positionnement du support fond ébaucheur (32, 32') prenant directement ou indirectement sur ladite came (48, 65, 73), comprise entre 0,5 mm et 1,2 mm, de préférence entre 0,7 mm et 0,9 mm, de préférence égale à 0,8 mm.

7. Dispositif de réglage (40, 40') selon l'une quelconque des revendications 1 à 6, dans lequel le mécanisme d'actionnement comprend un système d'indication de la position du mécanisme à came, représentative de la hauteur de positionnement du support fond ébaucheur (32, 32'), respectivement du support tête de soufflage (36).

8. Dispositif de réglage (40') selon l'une quelconque des revendications 1 à 7, lequel comprend un mécanisme de bridage (68) configuré pour fixer ledit dispositif de réglage sur une colonne (34) d'un dispositif ébaucheur (13), respectivement d'un dispositif finisseur (14), le mécanisme à came étant configuré pour recevoir en appui un organe de bridage (69) du support fond ébaucheur (32'), respectivement du support tête de soufflage (36), ou un organe de bridage d'un support intermédiaire sur lequel est bridé le support fond ébaucheur, respectivement le support tête de soufflage.

9. Support intermédiaire (35) d'un support fond ébaucheur (32) ou d'un support tête de soufflage (36), comprenant un premier organe de bridage (42) configuré pour fixer ledit support intermédiaire (35) sur une colonne (34) d'un dispositif ébaucheur (13), respectivement d'un dispositif finisseur (14), un organe de guidage (45) configuré pour recevoir en translation verticale une extrémité du support fond ébaucheur (32), respectivement du support tête de soufflage (36), et un second organe de bridage (47) configuré pour fixer ladite extrémité du support fond ébaucheur (32), respectivement du support tête de soufflage (36), lors de son montage sur l'organe de guidage (45), le support intermédiaire (35) comprenant un dispositif de réglage (40) selon l'une quelconque des revendications 1 à 7 agencé pour que le mécanisme à came reçoive en appui l'extrémité du support fond ébaucheur (32), respectivement du support tête de soufflage (36).

10. Machine de formage d'articles creux en verre, dite machine IS (9), laquelle comprend au moins une section (8) comportant un dispositif ébaucheur (13) muni d'un support fond ébaucheur (32) monté directement ou indirectement sur une colonne (34) au moyen d'un dispositif de réglage (40') selon la revendication 8, lequel est bridé sur la colonne (34).

11. Machine de formage d'articles creux en verre, dite machine IS (9), laquelle comprend au moins une section (8) comportant un dispositif ébaucheur (13) muni d'un support fond ébaucheur (32) monté sur un support intermédiaire (35) selon la revendication 9, lui-même monté sur une colonne (34).

12. Machine IS (9) selon la revendication 11, laquelle comprend entre une et seize sections (8) et autant de supports intermédiaires (35) agencés sur lesdites sections.

13. Procédé de réglage de la contrainte d'un support fond ébaucheur (32) sur une machine (9) de formage d'articles creux en verre comprenant au moins un dispositif ébaucheur (13) formant au moins un moule ébaucheur, au moins une colonne (34), au moins un support intermédiaire (35) présentant les caractéristiques de la revendication 9, et au moins un support fond ébaucheur (32), ledit procédé consistant en les étapes suivantes :
a) actionner le mécanisme à came pour le positionner dans une position d'appui haute selon laquelle le support fond ébaucheur sera placé en position haute sur le support intermédiaire (35),
b) monter une extrémité du support fond ébaucheur (32) sur l'organe de guidage (45) du support intermédiaire (35) et placer ladite extrémité en appui contre le mécanisme à came en position haute, puis brider le support fond ébaucheur (32) sur le support intermédiaire (35) au moyen du second organe de bridage (47),
c) placer le support fond ébaucheur (32) en position d'utilisation sur l'au moins un moule ébaucheur et brider le support intermédiaire (35) sur la colonne (34) au moyen du premier organe de bridage (42),
d) dégager le support fond ébaucheur (32) de l'au moins un moule ébaucheur,
e) actionner le mécanisme à came pour le positionner dans une position d'appui basse selon laquelle le support fond ébaucheur est placé en position basse,
f) débrider le support fond ébaucheur (32) du support intermédiaire (35) au moyen du second organe de bridage (47) pour permettre au support fond ébaucheur de descendre par gravité dans l'organe de guidage (45) du support intermédiaire (35) et venir en appui sur le mécanisme à came, dans une position de contrainte selon laquelle ledit support fond ébaucheur (32) sera mis en contrainte sur l'au moins un moule ébaucheur lors de sa mise en place sur celui-ci,
g) rebrider le support fond ébaucheur (32) sur le support intermédiaire (35) au moyen du second organe de bridage (47) en conservant le mécanisme à came en position d'appui basse.

14. Procédé de réglage de la contrainte d'un support fond ébaucheur (32') sur une machine (9) de formage d'articles creux en verre comprenant au moins un dispositif ébaucheur (13) formant au moins un moule ébaucheur, au moins une colonne (34), au moins un dispositif de réglage présentant les caractéristiques de la revendication 8, et au moins un support fond ébaucheur (32'), ledit procédé consistant en les étapes suivantes :
a) positionner le dispositif de réglage 40' sur la colonne et l'actionner pour le positionner dans une position d'appui haute selon laquelle le support fond ébaucheur (32') sera placé en position haute,
b) monter directement ou indirectement le support fond ébaucheur (32') sur la colonne (34), au-dessus du dispositif de réglage (40'),
c) poser le support fond ébaucheur (32') en position d'utilisation sur l'au moins un moule ébaucheur et brider le dispositif de réglage (40') sur la colonne avec le mécanisme à came appuyant directement ou indirectement contre le support fond ébaucheur (32'),
d) dégager le support fond ébaucheur (32') de l'au moins un moule ébaucheur,
e) actionner le mécanisme à came pour le positionner dans une position d'appui basse selon laquelle le support fond ébaucheur (32') se déplace en position basse,
f) brider directement ou indirectement le support fond ébaucheur (32') sur la colonne (34), dans une position de contrainte selon laquelle ledit support fond ébaucheur (32') sera mis en contrainte sur l'au moins un moule ébaucheur lors de sa mise en place sur celui-ci.
